# EUROPEAN PATENT APPLICATION

(11) **EP 3 187 255 A1**
(43) Date of publication of application: **05.07.2017**
(21) Application number: 15836560.1
(22) Date of filing: 21.08.2015
(51) Int. Cl.: B01J 3/00, B01J 3/06, F04B 3/00, F04B 19/00, F04B 19/02, F04B 37/00, F04B 37/10, F04B 37/12, B21D 26/00

(54) **MULTI-CHAMBER WITH ULTRA-HIGH-PRESSURE OR HYDRAULIC MOTOR COMPRESSORS OR MOTOR PUMPS FOR COMPRESSING GAS OR LIQUID AT ULTRA-HIGH PRESSURE, FORMED BY SEVERAL DIFFERENT-SIZED CONCENTRIC CHAMBERS, WHEREIN EACH CHAMBER CONTAINS SMALLER CHAMBERS**

(30) Priority: 27.08.2014 CL 2014002270
(71) Applicant: Mulet Martinez, Mauricio, Vallenar (CL)
(72) Inventor: Mulet Martinez, Mauricio, Vallenar (CL)
(74) Representative: Balder IP Law, S.L.
(86) International application number: PCT/CL2015/000043
(87) International publication number: WO 2016/029329

(57) **Abstract**

The invention relates to a multi-chamber with ultra-high-pressure or hydraulic motor compressors or motor pumps for compressing gas or liquid at ultra-high pressure, formed by several different-sized concentric chambers, wherein each chamber contains smaller chambers, there being installed between the chambers motors or pumps that enable fluid to be introduced into the inner chambers at increasingly greater pressure.

## Description

### Field of Invention

The present invention is an improvement of the patented invention "Multi-chamber and Motor Pumps for Generating Ultra-High-Pressure", Patent Application No. CL 2006-2331 and "Multi-chamber with Motor Pumps whose chambers plus the exterior do not have motor pumps or space for their installation, until after m chambers...", Patent Application No. CL 2012-0239; which is applied to several uses in different areas: ultra-high pressure food which makes it possible to sterilize it leaving the food with better organoleptic characteristics than when it is done by temperature; cutting of metallic plates with liquid jet accelerated by ultra high hydrostatic pressure, allowing a more precise cut and not changing characteristics of the material that is fused with oxyfuel; sintering to ultra high hydrostatic pressure in which it is possible to use and make new, ultra resistant materials with the desired shape.

### Description of the State of the Art

The prior art is given by the development which is based on the new way of achieving ultra high hydrostatic pressure through multi-chamber having ultra-high pressure motor pumps:
In the first patent application No. CL 2006-2331, there is only one chamber per motor pump and it is possible to achieve a hydrostatic pressure of 3 times or 10 times, or more, of the tensile strength of the material with which the motor pump is made. It achieves the ultra high pressure and can be used in food industry, sintering at ultra high pressure and cutting of materials with ultra high pressure.

Then, the improvement was incorporated, consisting of putting several chambers per each motor pump, because they support the pressure difference in a better way; so that it has less motor pumps than cameras, to achieve the same ultra high pressure. In this second case, for example, a pressure of 600 MPa is applied outside the multi-chamber and injected into a multi-chamber having 3 chambers at the beginning of the process without a motor pump, only to enter to a fourth chamber having the first motor pump. Then, the first motor pump generates pressure from 600 MPa to 1,000 MPa which are injected into chambers 5 and 6, and then to another motor pump that generates from 1,000 MPa to 1,400 MPa, and even further depending on the design of the multi-chamber.

This system is more efficient than the first one because it has several chambers by motor pump, it resists more than one chamber, having the wall with equal thickness that a set of concentric chambers.

The motor pumps are really simple, in essence they are two analogous pieces: one piece is a piston with a cylinder rigidly or solidly joined to another piece that is similar; so that the pistons match or fit into the cylinders of the other piece.

It does not need to be mounted on something solid because action and reaction efforts are generated between the cylinders and pistons of the motor pump itself; it is enough that they are secured with the flexible pipes. Therefore, as it is a pump or run on liquid, it can also be a gas-operated compressor, as in the present improvement we are patenting.

### Detailed description of the invention

The present improvement has the object of making it clear that, in order to achieve ultra high hydrostatic or isostatic pressure, it can start compressing gas, for example helium, argon, etc., to achieve a pressure of eg. 3,000MPa and then, the gas is transformed into liquid by effect of the pressure, to continue compressing the same liquid in later stages.

In more external stages, the gas is compressed, until it reaches a level of pressure and temperature in which the gas is transformed into liquid, so that the motor compressors must start to run with liquid, i.e. like motor pumps. The valves can work well either with gas or liquid so there is no problem.

But the liquid has less compressibility than a gas, so that once it is converted to liquid, the chamber in which it is located must have enough space so that the pressure does not excessively rise or fall with a pumping of the motor pump; or the motor pump must be small enough compared to the chamber, that the pressure does not rise or fall when the motor pump operates.

Although it does not contain significant changes, the multi-chamber with motor pumps or motor-compressors, it is estimated that it is a significant improvement to work with gas, because it allows to greatly facilitate the supply of heat to higher levels through electric energy.

## Claims

1. Multichamber with motor compressors or motor pumps that are formed by several chambers of different size so that they are concentric, arranged so that each chamber, whatever it is, contains in its interior all the smaller chambers, between chambers can be installed a motor and pneumatic or hydraulic pump or compressor so as to allow fluid to be introduced at higher pressures into the inner chambers, wherein each motor and particular pump or compressor, act with fluid entering the chamber and the motor at the same pressure as the compressor or pump, and discharges the motor to a previous chamber at a lower pressure or to the outside if it is the first motor, and the pump or compressor discharges it at higher pressure towards an inner chamber; so that ultra high pressure values can be achieved in the most inner chamber, and can be used for sintering at ultra high pressure, it can be used to cut materials if a nozzle is put out; can be used to process food at ultra high pressure; may have a mechanism for heating the parts or fluid, etc.

2. Multichamber with motor compressors or motor pumps that are formed by several chambers of different sizes so that they are concentric, arranged so that each chamber, whatever it is, contains in its interior all the smaller chambers, between chambers can be installed a motor and pneumatic or hydraulic pump or compressor, so as to allow fluid to be introduced at higher pressures into the inner chambers, wherein it enters a pumped fluid of pressure P1 into the first chamber, which if it is at a pressure lower than P1, enters outside the motor, increasing the pressure of the chamber 1, otherwise it goes into the interior of the motor 1 and when the motor is full, which is attached to the compressor or pump so that both motor and pump or compressor are filled, opens a discharge valve of the motor and simultaneously another check valve discharges the fluid from the compressor or pump to a higher pressure towards the chamber 2; the pressure in the chamber 1 will be lowered because it has evacuated the motor and the compressor and therefore a new pumping of fluid enters the motor until the pressure reaches P1 and begins to fill the motor 1 again, which simultaneously begins to fill the compressor, to discharge the motor out again and the pump or compressor in; when it reaches P2, chamber 2 also begins to operate the motor-compressor or motor-pump 2 until reaching P3; each motor pump or motor compressor in the chamber 2, 3, n, acts in the same manner, so that it compresses to P2, P3, Pn, which is higher than the tensile strength of the material of the multichamber.

3. Multichamber with motor compressors or motor pumps that are formed by several chambers of different size so that they are concentric, arranged so that each chamber, whatever it is, contains in its interior all the smaller chambers, between chambers can be installed a motor and pneumatic or hydraulic pump or compressor, so as to allow fluid to be introduced at higher pressures to the inner chambers, wherein it may have more than one chamber per compressor that is outside, or more than one chamber per motor compressor or motor pump; so that each one fills one, two and more chambers, at increasing pressures.

4. Multichamber with motor-compressors or motor pumps that are formed by several chambers of different size so that they are concentric, arranged so that each chamber, whatever it is, contains in its interior all the smaller chambers, between chambers can be installed a motor and pneumatic or hydraulic pump or compressor, so as to allow fluid to be introduced at higher pressures to the inner chambers, wherein the valves of different types must act with gas or liquid at high pressure, because if it starts with gas, with the pressure it becomes liquid and it must continue acting; so also the motor compressors after a particular stage is changed to motor pumps that for simplicity have no major problem, as is the lower compressibility of the liquid.

5. Multichamber with motor compressors or motor pumps that are formed by several chambers of different size so that they are concentric, arranged so that each chamber, whatever it is, contains in its interior all the smaller chambers, between chambers can be installed a motor and pneumatic or hydraulic pump or compressor, so that they allow the introduction of fluid at higher pressures to the inner chambers, wherein the motor and compressor or pump do not have crankshafts or cranks, they are simple cylinders with pistons and can be mounted in suspension without solid support, supported by the pipes carrying liquid or gas that are connected to the motor and pump or compressor, because the force that the motor generates is immediately counteracted by the pump or compressor; which can operate with a cylinder capacity every 1 second up to 5 minutes, if the motor compressor or motor pump goes very far inside.
